# EUROPEAN PATENT SPECIFICATION

(11) **EP 1 534 974 B1**
(45) Date of publication and mention of the grant of the patent: **07.03.2007**
(21) Application number: 02807630.5
(22) Date of filing: 30.07.2002
(51) Int. Cl.: F16D 55/228

(54) **CALIPER FOR A DISC BRAKE**
BREMSSATTEL FÜR SCHEIBENBREMSE
ETRIER DE FREIN A DISQUE

(43) Date of publication of application: 01.06.2005
(73) Proprietor: Freni Brembo S.p.A., 24035 Curno (Bergamo) (IT)
(72) Inventor: VENEZIANO, Aristide, I-24040 Lallio (IT); PICCOLI, Mauro, I-24128 Bergamo (IT)
(74) Representative: Crippa, Paolo Ernesto
(86) International application number: PCT/IT2002/000507
(87) International publication number: WO 2004/011819

(56) References cited:
- EP-A- 0 551 868
- EP-A- 1 016 804
- GB-A- 1 050 263
- US-A- 3 654 689
- US-A- 3 730 306
- US-A- 4 093 043
- US-A- 5 515 948
- US-A- 6 073 733

## Description

The present invention relates to a disk-brake caliper provided with ducts for supplying the brake fluid to the thrust means for the pads, such as hydraulic pistons and the like.

Disk-brake caliper of this type are known from US-A-3 730 306, US-A-4 093 043, US-A-5 515 948, GB-A-1 050 263, US-A-3 654 689, US-A-6 073 733, EP-A-1 016 804 and EP-A-0 551 868.

The caliper according to the invention is intended particularly but not exclusively for automotive use, generally in high-performance motor cars, for example, racing cars.

A disc brake comprises a disc-brake caliper and a disc. The disc has an axis of rotation and annular braking surfaces lying in opposed planes perpendicular to the axis of rotation. In the assembled configuration, the caliper is arranged astride the disc and has a first portion provided with pressure chambers facing the first braking surface thereof and a second portion provided with pressure chambers facing the second braking surface.

The caliper body has ducts which form a brake-fluid distribution circuit by means of which the fluid is supplied to the hydraulic pistons.

It is known to form the brake-fluid distribution circuit as a series of holes inside the caliper body, which form a circuit closed in a "loop" which is supplied at a single point of the caliper body and enables the brake fluid to be distributed both to the pressure chambers of the first portion of the caliper body and to the pressure chambers of the second portion thereof.

However, the implementation of a solution as described is complex because of the large number of holes to be formed in the caliper body and, consequently, because of the need to provide numerous plugs to close the openings of the holes from the exterior.

It is also known to produce a distribution circuit in which purely longitudinal holes are provided, included entirely in the first portion and in the second portion of the caliper body, respectively, and connected outside the caliper body by a pipe which, when the caliper has been mounted in the vehicle, will be arranged straddling the disc in the region of a bridge portion which connects the first and second portions of the caliper body at their ends.

However, constructions such as that just described have exhibited problems connected with vibration of the pipe, which lead to rupture of the pipe, mainly in the region of the attachment to the holes in the caliper body.

There is therefore a need to provide a disc-brake caliper which has a brake-fluid distribution circuit which is reliable in use and at the same time can be produced easily and economically.

The problem- underlying the present invention is that of devising a disc-brake caliper provided with a brake-fluid distribution circuit which has structural and functional characteristics such as to satisfy the above-mentioned needs and at the same time to overcome the disadvantages mentioned with reference to the prior art.

This problem is solved by a caliper according to Claim 1. Further characteristics and the advantages of the caliper according to the present invention will become clear from the following description of a preferred and non-limiting embodiment thereof, in which:

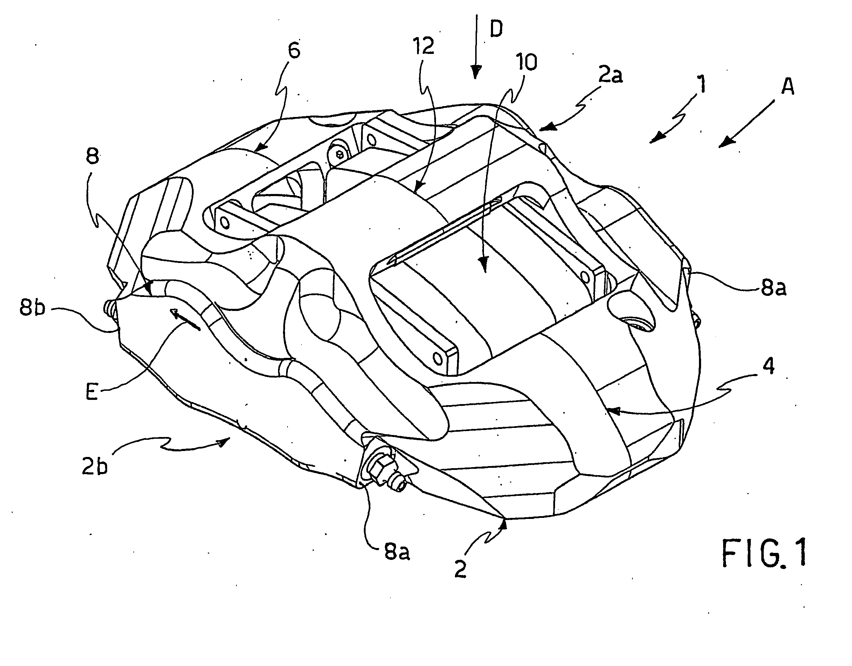

Figure 1 is an axonometric view of a disc-brake caliper according to the present invention,

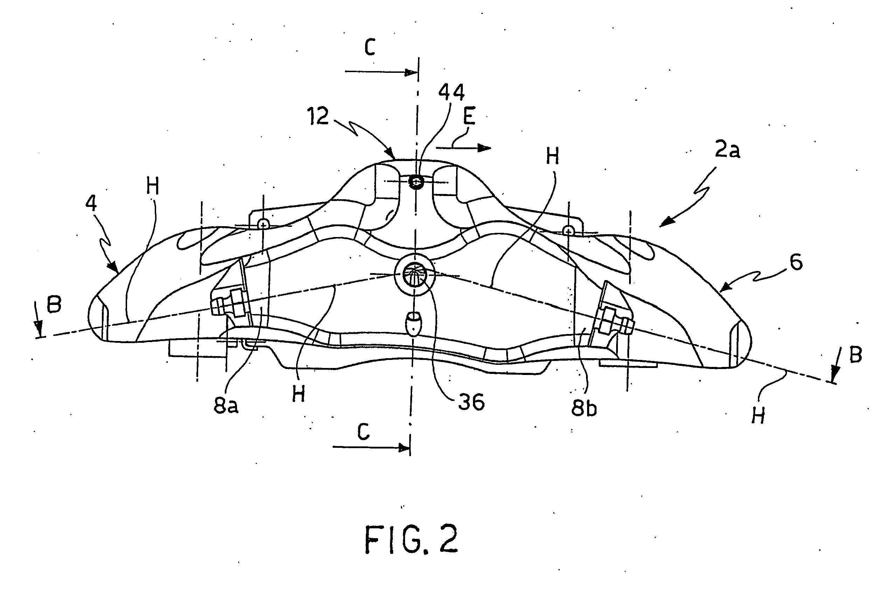

Figure 2 is a side view of the caliper of Figure 1, viewed along the line A,

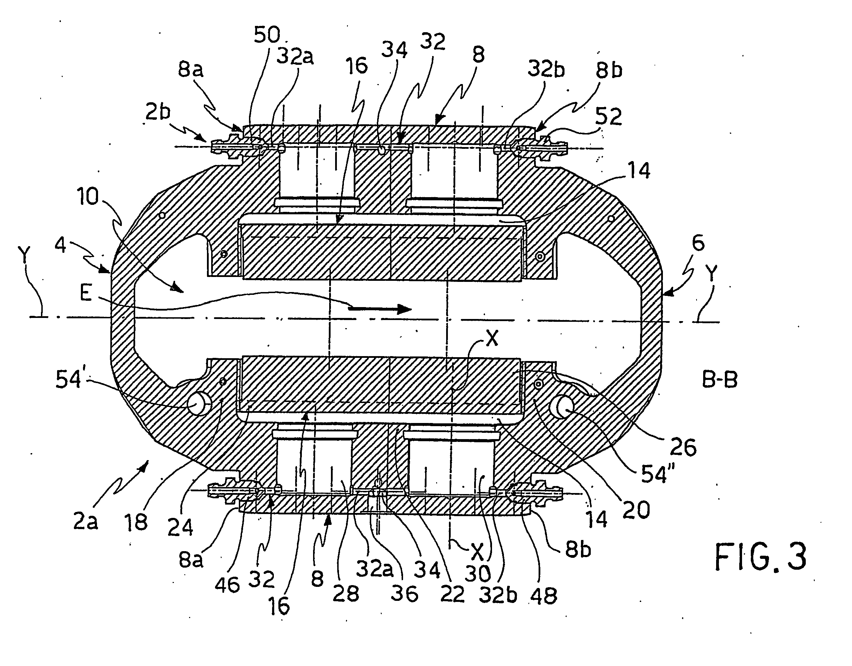

Figure 3 shows the caliper of Figure 1 in a section taken in section planes indicated by the line BB in Figure 2,

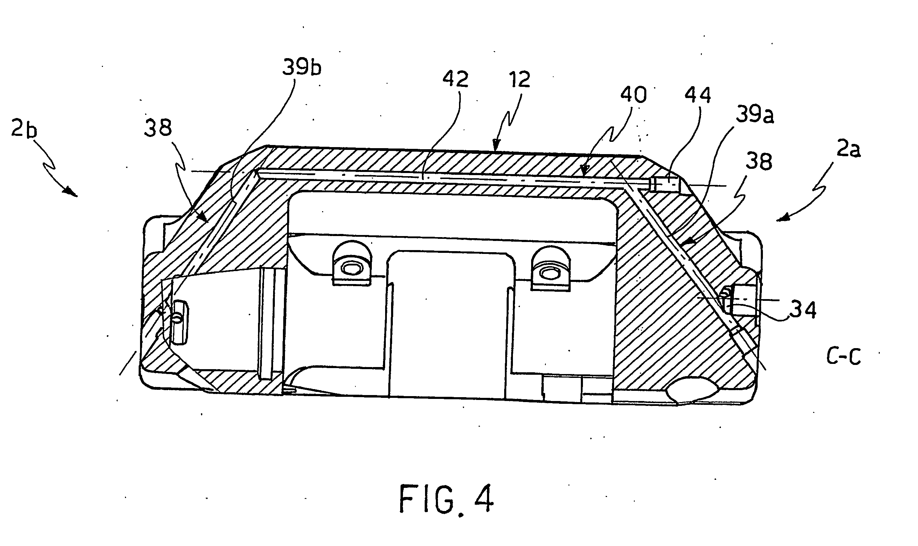

Figure 4 shows the caliper of Figure 2 in a section taken in a section plane indicated by the line CC in Figure 2,

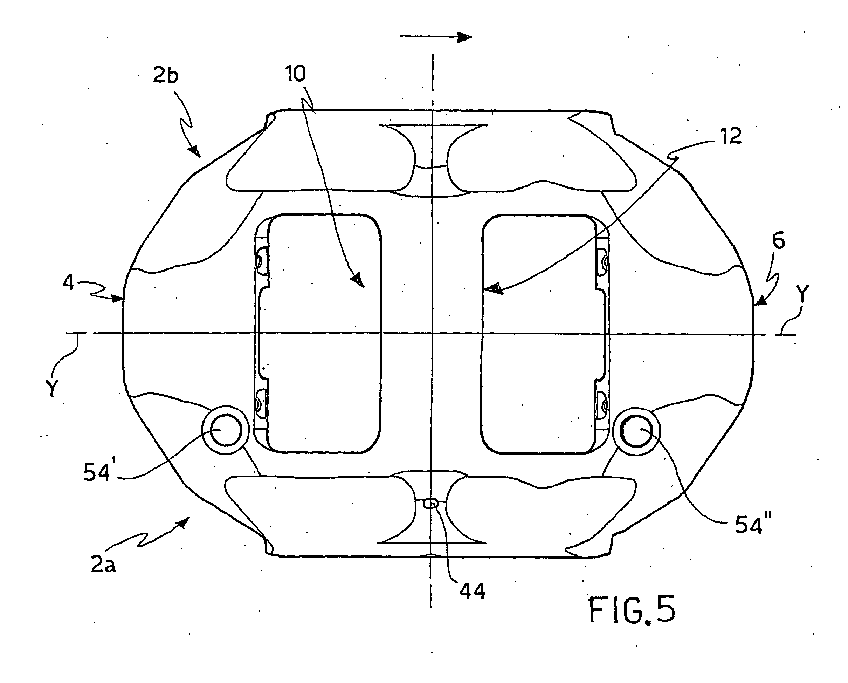

Figure 5 is a plan view of the caliper of Figure 1, viewed along the line D, and
Figure 6 shows schematically a configuration of mounting of the caliper of Figure 1 on the left-hand front and left-hand rear wheels of a motor vehicle.

With reference to the drawings, a disc-brake caliper is generally indicated 1.

The caliper 1 comprises a caliper body 2 which is intended to cooperate, in an assembled configuration of the disc brake, with a disc.

The disc has a predefined axis of rotation about which the disc rotates, firmly fixed to the wheel hub of a vehicle, during the normal operation of the brake.

In the following description, where reference is made to an axial direction for the caliper body, it is intended to refer to the direction of the axis of rotation of the disc which can be associated with the caliper body and, similarly, with reference to the disc itself, reference will be made to a circumferential or longitudinal direction, meaning a direction substantially tangential to a circumference of the disc.

The disc also has, disposed in planes perpendicular to its axis of rotation, a first annular braking surface and a second annular braking surface, opposite to the first.

In the configuration in which it is associated with the disc, the caliper body 2 is arranged astride the disc, with a first portion 2a of the caliper facing towards the first braking surface of the disc and a second portion 2b thereof facing towards the second braking surface of the disc.

Moreover, when the caliper body 2 is arranged astride the disc, a portion of the caliper body 2 faces towards the axis of rotation of the disc and an opposed portion is arranged astride the disc. The portion of the caliper body which faces towards the axis of rotation of the disc will be referred to below by the term "lower portion of the caliper body" and the portion opposite to the lower portion by the term "upper portion of the caliper body".

Furthermore, a plane of symmetry Y-Y defined for the caliper body is arranged perpendicular to the axis of rotation of the disc and extends centrally through the caliper body.

The first and second portions of the caliper body 2 are connected to one another by a first end element 4 and by a second end element 6 which are disposed at the circumferential ends of the portions of the caliper body and constitute elements joining the said portions.

In other words, the first and second portions of the caliper body, joined together by the end elements, form a closed annular block which, when associated with the disc, has the end elements arranged astride the disc.

According to a variant, the caliper body is unitary, that is, it is formed from a single solid block, for example, it is produced from a rolled section or from a semi-finished casting, preferably of aluminium alloy, suitably machined by means of machining operations such as milling, drilling, and the like.

Each portion of the caliper body has, on the outside of its portion which faces the disc, a first inclined surface 8a and a second inclined surface 8b which are preferably flat and lie in converging planes, and each of which is disposed in the region of a circumferential end of the said portion of the caliper body.

In a preferred embodiment, the inclined surfaces converge towards the lower portion of the caliper body. In a further embodiment, the inclined surfaces are parallel to one another.

Preferably, the inclined surfaces delimit a protruding wall 8 circumferentially.

The caliper body 2, configured as a closed annular block as described above, has a window 10 disposed in a central position relative thereto and delimited by the portions 2a, 2b of the caliper body and by the end elements 4, 6.

The window 10 forms, in particular, an opening towards the space inside the caliper body, delimited by the portions 2a, 2b of the caliper body and by the end elements.

In the region of the window 10 of the caliper body 2, the caliper body has at least one connection element 12 between the first portion 2a and the second portion 2b of the caliper body. In the configuration in which the caliper body 2 is associated with the disc, the at least one connection element 12 is arranged straddling the disc.

In other words, the connection element 12 joins the portions of the caliper body together, and is arranged in a "bridge" configuration, forming a connection between them.

In a preferred embodiment of the caliper body, the connection element 12, which is preferably single, extends substantially axially and forms an element for reinforcing the caliper body 2.

Whereas the portions 2a, 2b of the caliper body and the end elements 4, 6 form a closed annular structure,
the connection element joins central portions of the portions 2a, 2b of the caliper body.

In other words, the connection element 12 forms a cross-member reinforcing the caliper body, disposed in the region of the window 10 of the caliper body.

During a braking operation, the connection element 12 advantageously operates as a stay, limiting the deformation of the portions of the caliper body due to the clamping force generated by the thrust of the pistons. In particular, bending is limited by virtue of the arrangement of the connection element 12 in the region of the upper window 10 of the caliper body and by virtue of its strength characteristics.

Moreover, the connection element 12 is formed integrally with the caliper body. Further variants of the caliper body according to the invention provide for plurality of connection elements arranged, for example, between the portions of the caliper body in non-axial directions.

In the region of the window 10, the caliper body 2 has, formed in each portion thereof, at least one seat 14 for housing a pad 16. The connection element 12, which is preferably disposed in the region of the upper window 10 of the caliper body 2, is arranged in the region of the seats for housing the pads.

The seat 14 is in the form of a square recess formed in each portion of the caliper body in a manner such as to define a pocket suitable for housing the pad 16.

In particular, the seat is defined between a first side wall 18 and a second side wall 20, opposite the first, which side walls define the circumferential extent of the seat, as well as by a base wall 22.

The pad 16, comprising a plate 24 and friction material 26 supported by the plate, is arranged, when it is housed in its seat 14, in a manner such that the plate 24 faces the base wall 22 of the seat 14 and the friction material 26 faces towards one of the braking surfaces of the disc, in the configuration in which the caliper is associated with the disc.

In the region of the base wall 22 of the seat 14, each portion of the caliper body has at least one pressure chamber for slidably housing thrust means for pressing on the pad so as to cause it to interact, in the course of a braking operation, with the braking surface of the disc which the friction material of the pad faces. Preferably, the thrust means are formed by hydraulic pistons.

In a preferred embodiment, the pressure chamber is substantially cylindrical and is arranged axially. The pressure chamber is defined dimensionally by its nominal diameter.

In a preferred embodiment of the caliper body, each portion thereof has a plurality of pressure chambers, preferably a first pressure chamber 28 and a second pressure chamber 30, for housing respective first and second thrust means.

Preferably, the nominal diameter of each pressure chamber is different from one chamber to another. In particular, the nominal diameter of the first pressure chamber 28 is less than the nominal diameter of the second pressure chamber 30.

The pressure chambers are arranged in the region of the seat 14 of the pad 16 in a manner such that, with reference to the direction of rotation of the disc during the normal and predominant use of the brake, that is, when the vehicle is moving forwards, the pressure chamber with the smaller diameter is disposed upstream of the pressure chamber with the larger diameter.

The thrust means housed in the respective pressure chambers are acted on, during a braking operation, by the pressurized brake fluid which operates the thrust means so that the pad is pressed against the respective braking surface of the disc in order to generate the braking force. The brake fluid is supplied to the thrust means by a distribution circuit.

Moreover, the distribution circuit has longitudinal ducts 32 which preferably comprise a first longitudinal hole 32a and a. second longitudinal hole 32b.

The longitudinal ducts are formed entirely in the respective portions 2a, 2b of the caliper body.

In one embodiment, each of the longitudinal holes extends along a hole axis H-H substantially perpendicular to the inclined surfaces 8a and 8b which delimit the protruding wall 8 circumferentially.

The inclination of the axes of the longitudinal holes is predetermined in a manner such that the holes converge, preferably towards the upper portion of the caliper body.

In a further embodiment, the longitudinal ducts 32 comprise a single longitudinal hole formed in each portion of the caliper body so as to extend completely through the portion of the caliper body, communicating with both of the pressure chambers simultaneously.

Preferably, the first longitudinal hole 32a and the second longitudinal hole 32b with converging axes meet in a joining portion 34 of the circuit so as to be in communication with one another.

Moreover, each of the holes is in communication with at least one of the pressure chambers 28, 30 of the caliper body. In particular, according to a preferred embodiment, the first longitudinal hole 32a is in communication with the first pressure chamber 28 and the second longitudinal hole 32b is in communication with the second pressure chamber 30. The longitudinal holes continue along their respective axes so as also to extend beyond the pressure chamber, terminating, at one end, in the joining portion 34 and, at the other end, in the inclined surfaces.

In other words, the longitudinal holes have a portion disposed between the inclined surface of the caliper body and the pressure chamber thereof, and a portion extending from the first and disposed between the pressure chamber and the joining portion in which it joins the other longitudinal hole.

The longitudinal holes 32a, 32b are preferably blind, that is, each has a single opening, preferably disposed in a respective inclined surface 8a, 8b of a portion 2a, 2b of the caliper body, and terminates in the joining portion 34 inside the caliper body.

At least one of the portions of the caliper body also has a supply aperture 36 provided for the connection of the caliper body to external supply means such as flexible or rigid pipes connected, for example, to a disc-brake master cylinder.

The supply aperture is in communication with the distribution circuit and, preferably, is in communication with the joining portion 34 between the longitudinal holes 32a, 32b.

In a preferred embodiment of the caliper body, the supply aperture is constituted by a hole formed in the protruding wall 8 of the caliper body, substantially in an axial direction.

In a further embodiment of the caliper according to the invention, the distribution circuit comprises transverse ducts 38 in communication with the longitudinal ducts 32.

Preferably, the transverse ducts are formed by transverse holes which extend from the lower portion of each caliper body to its upper portion, converging towards the plane of symmetry Y-Y of the caliper body.

In a preferred embodiment, the distribution circuit comprises a first transverse hole 39a in the first portion 2a of the caliper body 2 and a second transverse hole 39b in the second portion 2b thereof.

The transverse holes extend through the joining portion 34 between the longitudinal holes 32a, 32b and terminate in the region of the connection element 12 between the portions of the caliper body.

Preferably, the transverse holes 39a, 39b, which are formed entirely within the caliper body, are blind, that is, each hole has only one opening in the upper portion of the caliper body or, preferably, in its lower portion.

The distribution circuit further comprises at least one portion which is disposed in the at least one connection element 12 between the portions of the caliper body.

In other words, the distribution circuit comprises axial ducts 40 constituted by at least one axial hole 42 formed in the connection element 12 between the portions 2a, 2b of the caliper body 2.

In yet other words, the connection element 12 comprises a portion of the distribution circuit which puts the longitudinal ducts 32 and the transverse ducts 38 of the first portion 2a of the caliper body 2 into communication with the transverse ducts 38 and the longitudinal ducts 32 of the second portion 2b of the caliper body 2.

The portion of the distribution circuit which is formed in the connection element 12 disposed in the region of the window 10 of the caliper body, is arranged straddling the disc and is formed in an element facing the window 10 of the caliper body 2.

In a preferred embodiment, the portion of the distribution circuit which is contained in the connection element 12 is formed by a blind hole, that is, by a hole having a single opening 44 formed in one of the portions of the caliper body and terminating in the transverse hole formed in the opposite portion of the caliper body.

In an operative condition of the caliper, that is, in a condition in which the caliper is ready to be associated with the disc, the openings of the ducts which form the brake-fluid distribution circuit are closed, with the exception of the supply aperture 36 disposed in one of the portions 2a, 2b. This aperture is provided for the connection of the caliper body to external brake-fluid supply means with which it is associated when the disc brake is in the mounted condition on the vehicle.

In particular, in the operative condition, the openings of the transverse ducts 38 and of the axial ducts 40 are closed by plugs (not shown) each formed by a sphere restrained by a grub screw.

In particular, in the operative condition of the caliper, the openings of the longitudinal holes are closed by removable plugs which form bleed valves.

In the embodiment described of the caliper according to the invention, the caliper has four bleed valves.

In particular, the caliper comprises a first bleed valve 46 and a second bleed valve 48 which close the first longitudinal hole 32a and the second longitudinal hole 32b of the first portion 2a of the caliper body 2, respectively. Moreover, the caliper comprises a first bleed valve 50 and a second bleed valve 52 which close the first longitudinal hole 32a and the second longitudinal hole 32b of the second portion 2b of the caliper body 2, respectively.

Furthermore, the caliper body has, preferably in only one of the portions 2a, 2b of the caliper body, means for the connection of the caliper body to a fixed portion of the vehicle for which the caliper is intended. According to a preferred embodiment, the connection means comprise a pair of connection holes 54', 54''.

In a preferred embodiment, the connection holes are disposed in the region of the connection between the first portion 2a of the caliper body 2 and the first end element 4, and between the first portion 2a of the caliper body 2 and the second end element 6 of the caliper body 2, respectively.

In a condition in which the disc brake is mounted in the vehicle for which it is intended, the disc is fixed firmly to the wheel hub and the caliper, which is operatively connected to brake-fluid supply means such as a flexible pipe connected to the supply aperture 36, is fixed firmly to a non-rotating part of the vehicle, for example, to a part of the suspension.

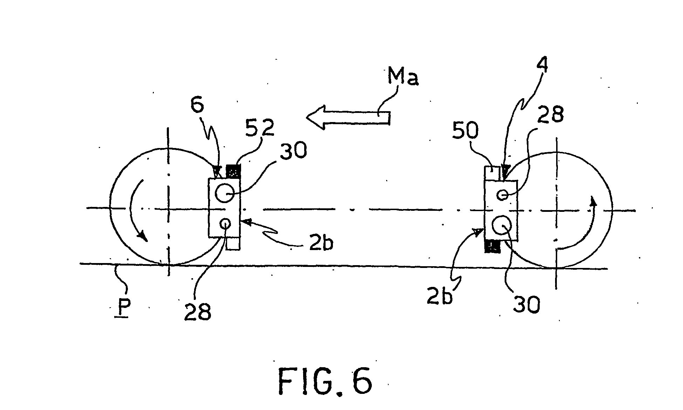

By way of example, reference is made to the mounting of the caliper in the region of the left-hand front wheel of a vehicle (Figure 6), preferably in a position at the rear of the wheel, with reference to the direction of forward movement Ma of the vehicle.

The caliper is mounted in a manner such that the connection holes 54' and 54" of the caliper body are disposed towards the inside of the vehicle, for connection to the suspension units. The brake-fluid supply aperture 36 is also arranged facing towards the inside of the vehicle, to facilitate connection to the fluid-supply means.

The disc associated with the caliper passes through the caliper body in a direction of forward movement E so that, with reference to the direction of forward movement, the first pressure chamber 28 having a nominal diameter smaller than the nominal diameter of the second pressure chamber 30 is upstream of the second pressure chamber 30.

In a parked condition of the vehicle, the vehicle is disposed on a supporting surface P so that, in the mounted configuration of the disc brake, the second end element 6 of the caliper body faces upwards.

Advantageously, each of the portions of the caliper body has a bleed valve which is disposed, relative to the surface P supporting the vehicle, at a level higher than the level at which any other point of the brake-fluid distribution circuit is disposed.

In the example of mounting described, the second bleed valve 48 of the first portion 2a of the caliper body and the second bleed valve 52 of the second portion 2b of the caliper body 2 are suitable for being used as bleed valves for performing conventional bleeding operations.

The embodiment described of the caliper according to the invention can advantageously be used for mounting in the region of the left-hand rear wheel of the vehicle, in which the caliper is preferably disposed at the front of the wheel, with reference to the direction of forward movement Ma.

In this case, the caliper is mounted in a manner such that the connection holes 54' and 54" and the brake-fluid supply aperture 36 of the caliper body are disposed towards the inside of the vehicle.

The disc associated with the caliper passes through the caliper body in the direction of forward movement E so that, with reference to the direction of forward movement, the first pressure chamber 28 which has a nominal diameter smaller than the nominal diameter of the second pressure chamber 30 is upstream of the second pressure chamber 30.

In the parked condition of the vehicle, the vehicle is disposed on the supporting surface P so that, in the above-mentioned mounted configuration, the first end element 4 of the caliper body faces upwards relative to the remaining portion of the caliper body.

Advantageously, in the configuration in which it is mounted on the left-hand rear wheel, the caliper also has bleed valves which are disposed, relative to the surface P supporting the vehicle, at a level higher than the level at which any other point of the brake-fluid distribution circuit is disposed.

In the embodiment described, the first bleed valve 46 of the first portion 2a of the caliper body and the first bleed valve 50 of the second portion 2b of the caliper body 2 are suitable for being used as bleed valves for performing conventional bleeding operations.

In a further embodiment of the caliper according to the invention, the connection holes 54' and 54" and the supply aperture 36 are disposed in the second portion 2b of the caliper body 2.

This embodiment is advantageously usable for the mounting of the caliper on the right-hand front wheel and on the right-hand rear wheel.

For mounting on the right-hand front wheel, the second valve 48 of the first portion 2a of the caliper body and the second valve 52 of the second portion 2b of the caliper body are usable as bleed valves.

For mounting on the right-hand rear wheel, the first valve 46 of the first portion 2a of the caliper body and the first valve 50 of the second portion 2b of the caliper body are usable as bleed valves.

The caliper according to the invention thus advantageously provides at least one valve which is disposed at a level higher than the level of any point of the distribution circuit, and which is suitable for being used as a bleed valve since it is not engaged by further devices such as external pipes of the distribution circuit or the like.

According to a further advantageous aspect, in order to provide the calipers necessary for mounting on the vehicle in the front and rear positions as well as the left-hand and right-hand positions, it is necessary to produce only two ranges of calipers, which preferably differ solely in the arrangement of the brake-fluid supply apertures and of the holes for connection to the vehicle.

The number of ranges of calipers to be produced is thus advantageously reduced, with clear advantages for the simplification of production, storage and management.

In a further variant, the caliper has a pair of connection holes in each portion of the caliper body, a supply aperture in the first portion thereof, and a further supply aperture in the second portion.

In this variant; the caliper is advantageously usable for mounting on all four wheels, by suitably closing the supply aperture which is not used and preferably closing the connection holes which are not used.

Unusually, the caliper according to the invention has a brake-fluid distribution circuit which is reliable in use and at the same time can be produced easily and economically.

Advantageously, the caliper according to the invention makes use of the connection element, which is provided for improving the bending strength of the caliper body, for connecting the holes that are provided in the two portions of the caliper body.

Advantageously, the holes formed in the portions of the caliper body converge towards a joining portion from which the axial hole included in the connection element between the portions extends, and have their respective openings closed by plugs which are suitable for being used as bleed valves in the various configurations of mounting of the caliper on the vehicle.

According to a further advantageous aspect, the inclination of the longitudinal holes enables them to overcome the considerable circumferential curvature of calipers intended for high-performance vehicles, establishing communication between the supply aperture, which is arranged centrally relative to the portion of the caliper body, and the openings of the longitudinal holes which are disposed at the circumferential ends of the portion.

Naturally, in order to satisfy contingent and specific requirements, a person skilled in the art will be able to apply many modifications and variations to the above-described disk-brake caliper.

According to a further variant of the caliper according to the invention, the connection element between the first portion and the second portion of the caliper body has a further duct formed in the connection element and covered by the wall of a cover, preferably of sheet steel. The duct is advantageously provided for a flow of cooling air.

With regard to the provision of the above-mentioned cooling duct, reference is made to the Applicant's document EP1016804.

According to an advantageous aspect, the above-mentioned variant provided with the cooling duct, which is arranged between the portion of the distribution circuit that is disposed in the connection element and the disc, protects the brake fluid contained in this portion of the distribution circuit from excessive heating due mainly to its proximity to the hot disc.

Naturally, these variants are also intended to be included within the scope of protection of the invention as defined by the appended claims.

## Claims

1. A disc-brake caliper comprising:
- a caliper body (2) suitable for being associated with a disc with a first annular braking surface and a second annular braking surface remote from the first,
- the caliper body (2) having, in a configuration in which it is associated with the disc, a first portion (2a) facing towards the first braking surface of the disc and a second portion (2b) facing towards the second braking surface of the disc,
- at least one seat (14) formed in the caliper body for housing a pad (16) which cooperates with thrust means which are acted on, during a braking operation, by a brake fluid in order to press on the pad so as to cause it to interact with the braking surfaces of the disc in order to generate a braking force,
- said first and second portions (2a, 2b) of the caliper body (2) being connected to one another by a first end element (4) and by a second end element (6) which are disposed at the circumferential ends of the portions (2a, 2b) of the caliper body (2) and constitute elements joining the said portions (2a, 2b),
- a brake-fluid distribution circuit suitable for supplying the brake fluid to the thrust means,
- at least one connection element (12) between the first portion (2a) and the second portion (2b) of the caliper body (2), which connection element (12) is arranged, in the configuration in which the caliper body (2) is associated with the disc, straddling the disc in the region of the at least one seat (14) for the pad (16),
- said connection element (12) comprising at least a portion of the brake-fluid distribution circuit,
**characterised in that**
- said connection element (12) being formed as single part integrally with the caliper body (2),
- said brake-fluid distribution circuit comprising longitudinal ducts (32) which are formed in each portion (2a, 2b) of the caliper body (2),
- said ducts (32a, 32b) of each portion (2a, 2b) of the caliper body (2) having opposed longitudinal openings which are closed by removable plugs (46, 48; 50, 52) in an operative condition of the caliper.

2. A caliper according to Claim 1 in which the connection element (12) joins the portions (2a, 2b) of the caliper body (2) together and is arranged in a "bridge" configuration between them.

3. A caliper according to Claim 1 or Claim 2 in which the connection element (12) forms a reinforcing cross-member for the caliper body (2).

4. A caliper according to any one of the preceding claims in which the connection element (12) operates as a stay, limiting the deformation of the portions (2a, 2b) of the caliper body (2), during a braking operation.

5. A caliper according to any one of the preceding claims in which each portion (2a, 2b) of the caliper body (2) has at least one pressure chamber for slidably housing thrust means for acting on the pad.

6. A caliper according to Claim 5 in which the thrust means are hydraulic pistons.

7. A caliper according to any one of the preceding claims in which each portion (2a, 2b) of the caliper body (2) has a first pressure chamber (28) and a second pressure chamber (30).

8. A caliper according to Claim 7 in which the nominal diameter of the first pressure chamber (28) is less than the nominal diameter of the second pressure chamber (30), the first chamber (28) being disposed upstream of the second chamber (30), with reference to the direction of rotation of the disc suitable for being associated with the caliper.

9. A caliper according to Claim 8 in which the longitudinal ducts comprise, in each portion of the caliper body, a longitudinal hole communicating simultaneously with both pressure chambers.

10. A caliper according to Claim 8 in which the longitudinal ducts comprise, in each portion of the caliper body, a first longitudinal hole (32a) and a second longitudinal hole (32b).

11. A caliper according to Claim 10 in which the longitudinal holes extend along converging hole axes (HH).

12. A caliper according to Claim 10 or Claim 11 in which the longitudinal holes (32a, 32b) meet in a joining portion (34) so as to be in communication with one another.

13. A caliper according to Claim 1 in which each portion (2a, 2b) of the caliper body (2) has a first pressure chamber (28) and a second pressure chamber (30), the distribution circuit having longitudinal ducts (32) each formed entirely in one of the portions (2a, 2b) of the caliper body (2) and comprising a first longitudinal hole (32a) and a second longitudinal hole (32b) which are in communication with the first pressure chamber (28) and with the second pressure chamber (30), respectively.

14. A caliper according to any one of the preceding claims, provided with at least one supply aperture (36) which is in communication with the distribution circuit and is provided for the connection of the caliper body (2) to brake-fluid supply means.

15. A caliper body according to any one of the preceding Claims in which the distribution circuit comprises transverse ducts (38) which are in communication with the longitudinal ducts (32).

16. A caliper according to Claim 15 in which the transverse ducts (38) extend from a lower portion of the caliper body facing the disc to an upper portion thereof, and converge towards a plane of symmetry (YY) of the caliper body (2).

17. A caliper according to Claim 16 in which the transverse ducts (38) comprise a first transverse hole (39a) formed in the first portion (2a) of the caliper body (2) and a second transverse hole (39b) formed in the second portion (2b) thereof.

18. A caliper according to any one of the preceding claims in which the portion of the distribution circuit which is included in the connection element (12) forms axial ducts (40).

19. A caliper according to Claim 18 in which the axial ducts (40) comprise at least one axial hole (42).

20. A caliper according to Claim 19 in which the axial hole (42) enables longitudinal ducts (32) formed in the first portion (2a) of the caliper body (2) to be put into communication with longitudinal ducts (32) formed in the second portion (2b) thereof.

21. A caliper according to Claim 1 in which the plugs form bleed valves.

22. A caliper according to any one of the preceding claims further comprising means for connecting the caliper body to a fixed portion of the vehicle.

23. A caliper according to Claim 22 in which the connection means comprise connection holes (54', 54").

24. A caliper according to Claim 23 in which there are two connection holes, both formed in one of the portions (2a, 2b) of the caliper body (2).

25. A caliper according to any one of the preceding claims in which the connection element is provided with a duct formed by an axial channel facing the disc.

26. A caliper according to Claim 25 in which the duct is covered by the wall of a cover.

27. A caliper according to Claim 26 in which the wall of the cover is made of sheet steel.

28. A caliper according to Claim 1 wherein the caliper comprises a first bleed valve (46) and a second bleed valve (48) which close a first longitudinal duct (32a) and a second longitudinal duct (32b) of the first portion (2a) of the caliper body (2), respectively.

29. A caliper according to Claim 1 wherein the caliper comprises a first bleed valve (50) and a second bleed valve (52) which close a first longitudinal duct (32a) and a second longitudinal duct (32b) of the second portion (2b) of the caliper body (2), respectively.

## Patentansprüche

1. Scheibenbremssattel, umfassend:
- einen Bremssattelkörper (2), welcher geeignet ist, einer Scheibe, die eine erste ringförmige Bremsfläche und eine von der ersten entfernte zweite ringförmige Bremsfläche aufweist, zugeordnet zu sein,
- wobei der Bremssattelkörper (2) in einer Konfiguration, in welcher er der Scheibe zugeordnet ist, einen ersten Abschnitt (2a), der in Richtung der ersten Bremsfläche der Scheibe gewandt ist, und einen zweiten Abschnitt (2b) aufweist, der in Richtung der zweiten Bremsfläche der Scheibe gewandt ist,
- wenigstens einen Sitz (14), welcher im Bremssattelkörper zur Aufnahme eines Bremsbelags (16) ausgebildet ist, welcher mit Schubmitteln zusammenarbeitet, die auf ihn während einer Bremshandlung durch eine Bremsflüssigkeit wirken, um auf den Bremsbelag zu drücken, um diesen so zu veranlassen, mit den Bremsflächen der Scheibe zusammenzuwirken, um eine Bremskraft zu erzeugen,
- wobei der erste und der zweite Abschnitt (2a, 2b) des Bremssattelkörpers (2) miteinander durch ein erstes Endelement (4) und durch ein zweites Endelement (6) verbunden sind, welche auf den umfangsmäßigen Enden der Abschnitte (2a, 2b) des Bremssattelkörpers (2) angeordnet sind und welche die Abschnitte (2a, 2b) verbindende Elemente darstellen,
- einen Bremsflüssigkeitsverteilungskreislauf zum Zuführen der Bremsflüssigkeit zu den Schubmitteln,
- wenigstens ein Verbindungselement (12) zwischen dem ersten Abschnitt (2a) und dem zweiten Abschnitt (2b) des Bremssattelkörpers (2), wobei das Verbindungselement (12) in der Konfiguration, in welcher der Bremssattelkörper (2) der Scheibe zugeordnet ist, so angeordnet ist, dass die Scheibe in dem Bereich des wenigstens einen Sitzes (14) für den Bremsbelag (16) überspannt wird,
- wobei das Verbindungselement (12) wenigstens einen Abschnitt des Bremsflüssigkeitsverteilungskreislaufs umfasst,
**dadurch gekennzeichnet, dass**
- das Verbindungselement (12) einstückig mit dem Bremssattelkörper (2) ausgebildet ist,
- der Bremsflüssigkeitsverteilungskreislauf längs verlaufende Kanäle (32) umfasst, welche in jedem Abschnitt (2a, 2b) des Bremssattelkörpers (2) ausgebildet sind,
- die Kanäle (32a, 32b) jedes Abschnitts (2a, 2b) des Bremssattelkörpers (2) gegenüberliegende längs verlaufende Öffnungen aufweisen, welche durch entfernbare Stöpsel (46, 48; 50, 52) in einem Betriebszustand des Bremssattels verschlossen sind.

2. Bremssattel gemäß Anspruch 1, in welchem das Verbindungselement (12) die Abschnitte (2a, 2b) des Bremssattelkörpers (2) zusammenfügt und in einer "Brücken"-Konfiguration zwischen ihnen angeordnet ist.

3. Bremssattel gemäß Anspruch 1 oder Anspruch 2, in welchem das Verbindungselement (12) ein verstärkendes Querträgerelement für den Bremssattelkörper (2) bildet.

4. Bremssattel gemäß jedem der vorangehenden Ansprüche, in welchem das Verbindungselement (12) als eine Stütze arbeitet, welche die Verformung der Abschnitte (2a, 2b) des Bremssattelkörpers (2) während der Bremshandlung begrenzt.

5. Bremssattel gemäß jedem der vorangehenden Ansprüche, in welchem jeder Abschnitt (2a, 2b) des Bremssattelkörpers (2) wenigstens eine Druckkammer zur gleitfähigen Aufnahme von Schubmitteln zum Wirken auf den Bremsbelag aufweist.

6. Bremssattel gemäß Anspruch 5, in welchem die Schubmittel hydraulische Kolben sind.

7. Bremssattel gemäß jedem der vorangehenden Ansprüche, in welchem jeder Abschnitt (2a, 2b) des Bremssattelkörpers (2) eine erste Druckkammer (28) und eine zweite Druckkammer (30) aufweist.

8. Bremssattel gemäß Anspruch 7, in welchem der Nenndurchmesser der ersten Druckkammer (28) kleiner ist als der Nenndurchmesser der zweiten Druckkammer (30), wobei die erste Kammer (28) stromaufwärts der zweiten Kammer (30) in Bezug auf die Richtung der Drehung der Scheibe, die geeignet für die Verwendung mit dem Bremssattel ist, angeordnet ist.

9. Bremssattel gemäß Anspruch 8, in welchem die längs verlaufenden Kanäle in jedem Abschnitt des Bremssattelkörpers ein längs verlaufendes Loch umfassen, welches gleichzeitig mit beiden Druckkammern in Verbindung steht.

10. Bremssattel gemäß Anspruch 8, in welchem die längs verlaufenden Kanäle in jedem Abschnitt des Bremssattelkörpers ein erstes längs verlaufendes Loch (32a) und ein zweites längs verlaufendes Loch (32b) umfassen.

11. Bremssattel gemäß Anspruch 10, in welchem die längs verlaufenden Löcher sich entlang der zusammenlaufenden Lochachsen (HH) erstrecken.

12. Bremssattel gemäß Anspruch 10 oder Anspruch 11, in welchem die längs verlaufenden Löcher (32a, 32b) sich in einem Zusammenfügungsabschnitt (34) treffen, um so in Verbindung miteinander zu sein.

13. Bremssattel gemäß Anspruch 1, in welchem jeder Abschnitt (2a, 2b) des Bremssattelkörpers (2) eine erste Druckkammer (28) und eine zweite Druckkammer (30) aufweist, wobei der Verteilungskreislauf längs verlaufende Kanäle (32) aufweist, die jeder zur Gänze in einem der Abschnitte (2a, 2b) des Bremssattelkörpers (2) ausgebildet sind und ein erstes längs verlaufendes Loch (32a) und ein zweites längs verlaufendes Loch (32b) umfassen, welche jeweils in Verbindung mit der ersten Druckkammer (28) beziehungsweise mit der zweiten Druckkammer (30) stehen.

14. Bremssattel gemäß jedem der vorangehenden Ansprüche, vorgesehen mit wenigstens einer Versorgungsöffnung (36), welche sich in Verbindung mit dem Verteilungskreislauf befindet und für die Verbindung des Bremssattelkörpers (2) mit einem Bremsflüssigkeitsversorgungsmittel bereitgestellt ist.

15. Bremssattel gemäß jedem der vorangehenden Ansprüche, in welchem der Verteilungskreislauf quer verlaufende Kanäle (38) umfasst, die in Verbindung mit den Längskanälen (32) stehen.

16. Bremssattel gemäß Anspruch 15, in welchem sich die quer verlaufenden Kanäle (38) von einem unteren Abschnitt des Bremssattelkörpers zugewandt der Scheibe zu einem oberen Abschnitt von diesem erstrecken und in Richtung einer Symmetrieebene (YY) des Bremssattelkörpers (2) zusammenlaufen.

17. Bremssattel gemäß Anspruch 16, in welchem die quer verlaufenden Kanäle (38) ein erstes quer verlaufendes Loch (39a), das im ersten Abschnitt (2a) des Bremssattelkörpers (2) ausgebildet ist, und ein zweites quer verlaufendes Loch (39b), das in seinem zweiten Abschnitt (2b) ausgebildet ist, umfassen.

18. Bremssattel gemäß jedem der vorangehenden Ansprüche, in welchem der Abschnitt des Verteilungskreislaufes, welcher im Verbindungselement (12) ausgebildet ist, axial verlaufende Kanäle (40) umfasst.

19. Bremssattel gemäß Anspruch 18, in welchem die axial verlaufenden Kanäle (40) wenigstens ein axial verlaufendes Loch (42) umfassen.

20. Bremssattel gemäß Anspruch 19, in welchem das axial verlaufende Loch (42) es längs verlaufenden Kanälen (32), die im ersten Abschnitt (2a) des Bremssattelkörpers (2) ausgebildet sind, ermöglicht, in Verbindung mit den längs verlaufenden Kanälen (32), die in seinem zweiten Abschnitt (2b) ausgebildet sind, gebracht zu werden.

21. Bremssattel gemäß Anspruch 1, in welchem die Stöpsel Ablassventile bilden.

22. Bremssattel gemäß jedem der vorangehenden Ansprüche, des Weiteren umfassend Mittel zum Verbinden des Bremssattelkörpers mit einem feststehenden Abschnitt des Fahrzeugs.

23. Bremssattel gemäß Anspruch 22, in welchem die Verbindungsmittel Verbindungslöcher (54', 54'') umfassen.

24. Bremssattel gemäß Anspruch 23, in welchem es zwei Verbindungslöcher gibt, die beide in einem der Abschnitte (2a, 2b) des Bremssattelkörpers (2) ausgebildet sind.

25. Bremssattel gemäß jedem der vorangehenden Ansprüche, in welchem das Verbindungselement mit einem Kanal bereitgestellt ist, welcher durch einen axial verlaufenden Kanal ausgebildet ist, der der Scheibe zugewandt ist.

26. Bremssattel gemäß Anspruch 25, in welchem der Kanal durch die Wand einer Abdeckung bedeckt ist.

27. Bremssattel gemäß Anspruch 26, in welchem die Wand der Abdeckung aus einem Stahlblech hergestellt ist.

28. Bremssattel gemäß Anspruch 1, wobei der Bremssattel ein erstes Ablassventil (46) und ein zweites Ablassventil (48) umfasst, welche jeweils einen ersten längs verlaufenden Kanal (32a) und einen zweiten längs verlaufenden Kanal (32b) des ersten Abschnitts (2a) des Bremssattelkörpers (2) verschließen.

29. Bremssattel gemäß Anspruch 1, wobei der Bremssattel ein erstes Ablassventil (50) und ein zweites Ablassventil (52) umfasst, welche jeweils einen ersten längs verlaufenden Kanal (32a) und einen zweiten längs verlaufenden Kanal (32b) des zweiten Abschnitts (2b) des Bremssattelkörpers (2) verschließen.

## Revendications

1. Etrier de frein à disque comprenant :
un corps d'étrier (2) adapté pour être associé à un disque ayant une première surface de freinage annulaire et une seconde surface de freinage annulaire éloignée de la première,
le corps d'étrier (2) comportant, dans une configuration dans laquelle il est associé au disque, une première partie (2a) faisant face à la première surface de freinage du disque et une seconde partie (2b) faisant face à la seconde surface de freinage du disque,
au moins un siège (14) formé dans le corps d'étrier destiné à loger un patin (16) qui coopère avec des moyens de poussée sur lesquels agit, pendant une opération de freinage, un liquide de frein, de façon à l'amener à interagir avec les surfaces de freinage du disque afin de générer une force de freinage,
lesdites première et seconde parties (2a, 2b) du corps d'étrier (2) étant raccordées l'une à l'autre au moyen d'un premier élément d'extrémité (4) et d'un second élément d'extrémité (6) qui sont disposés au niveau des extrémités circonférentielles des parties (2a, 2b) du corps d'étrier (2) et constituent des éléments joignant lesdites parties (2a, 2b),
un circuit de distribution de liquide de frein adapté pour distribuer le liquide de frein aux moyens de poussée,
au moins un élément de raccordement (12) entre la première partie (2a) et la seconde partie (2b) du corps d'étrier (2), lequel élément de raccordement (12) est disposé, dans la configuration dans laquelle le corps d'étrier (2) est associé au disque, de façon à enjamber le disque dans la région du ou des sièges (14) pour le patin (16),
ledit élément de raccordement (12) comprenant au moins une partie du circuit de distribution de liquide de frein,
**caractérisé en ce que**
ledit élément de raccordement (12) est formé en une seule partie de façon intégrée au corps d'étrier (2),
ledit circuit de distribution de liquide de frein comprend des conduits longitudinaux (32) qui sont formés dans chaque partie (2a, 2b) du corps d'étrier (2),
lesdits conduits (32a, 32b) de chaque partie (2a, 2b) du corps d'étrier (2) comportent des ouvertures longitudinales opposées qui sont fermés par des bouchons amovibles (46, 48 ; 50, 52) dans une condition de fonctionnement de l'étrier.

2. Etrier selon la revendication 1, dans lequel l'élément de raccordement (12) joint les parties (2a, 2b) du corps d'étrier (2) ensemble et est disposé en une configuration en « pont » entre elles.

3. Etrier selon la revendication 1 ou la revendication 2, dans lequel l'élément de raccordement (12) forme une traverse de renforcement pour le corps d'étrier (2).

4. Etrier selon l'une quelconque des revendications précédentes, dans lequel l'élément de raccordement (12) fonctionne comme un étai, limitant la déformation des parties (2a, 2b) du corps d'étrier (2) pendant une opération de freinage.

5. Etrier selon l'une quelconque des revendications précédentes, dans lequel chaque partie (2a, 2b) du corps d'étrier (2) comporte au moins une chambre de pression destinée à loger de façon coulissante les moyens de poussée pour agir sur le patin.

6. Etrier selon la revendication 5, dans lequel les moyens de poussée sont des pistons hydrauliques.

7. Etrier selon l'une quelconque des revendications précédentes, dans lequel chaque partie (2a, 2b) du corps d'étrier (2) comporte une première chambre de pression (28) et une seconde chambre de pression (30).

8. Etrier selon la revendication 7, dans lequel le diamètre nominal de la première chambre de pression (28) est inférieur au diamètre nominal de la seconde chambre de pression (30), la première chambre (28) étant disposée en amont de la seconde chambre (30), par rapport à la direction de rotation du disque adapté pour être associé à l'étrier.

9. Etrier selon la revendication 8, dans lequel les conduits longitudinaux comprennent, dans chaque partie du corps d'étrier, un trou longitudinal communiquant simultanément avec les deux chambres de pression.

10. Etrier selon la revendication 8, dans lequel les conduits longitudinaux comprennent, dans chaque partie du corps d'étrier, un premier trou longitudinal (32a) et un second trou longitudinal (32b).

11. Etrier selon la revendication 10, dans lequel les trous longitudinaux s'étendent le long d'axes de trou convergents (HH).

12. Etrier selon la revendication 10 ou la revendication 11, dans lequel les trous longitudinaux (32a, 32b) se rencontrent dans une partie de jonction (34) de façon à être en communication l'un avec l'autre.

13. Etrier selon la revendication 1, dans lequel chaque partie (2a, 2b) du corps d'étrier (2) comporte une première chambre de pression (28) et une seconde chambre de pression (30), le circuit de distribution comportant des conduits longitudinaux (32) chacun formé entièrement dans l'une des parties (2a,2b) du corps d'étrier (2) et comprenant un premier trou longitudinal (32a) et un second trou longitudinal (32b) qui sont en communication avec la première chambre de pression (28) et la seconde chambre de pression (30), respectivement.

14. Etrier selon l'une quelconque des revendications précédentes, muni d'au moins une ouverture d'alimentation (36) qui est en communication avec le circuit de distribution et qui est destinée à la connexion du corps d'étrier (2) avec le moyen de distribution de liquide de frein.

15. Corps d'étrier selon l'une quelconque des revendications précédentes, dans lequel le circuit de distribution comprend des conduits transversaux (38) qui sont en communication avec les conduits longitudinaux (32).

16. Etrier selon la revendication 15, dans lequel les conduits transversaux (38) s'étendent depuis une partie inférieure du corps d'étrier qui fait face au disque jusqu'à une partie supérieure de celui-ci, et convergent vers un plan de symétrie (YY) du corps d'étrier (2).

17. Etrier selon la revendication 16, dans lequel les conduits transversaux (38) comprennent un premier trou transversal (39a) formé dans la première partie (2a) du corps d'étrier (2) et un second trou transversal (39b) formé dans sa seconde partie (2b).

18. Etrier selon l'une quelconque des revendications précédentes, dans lequel la partie du circuit de distribution qui est incluse dans l'élément de raccordement (12) forme des conduits axiaux (40).

19. Etrier selon la revendication 18, dans lequel les conduits axiaux (40) comprennent au moins un trou axial (42).

20. Etrier selon la revendication 19, dans lequel le trou axial (42) permet que les conduits longitudinaux (32) formés dans la première partie (2a) du corps d'étrier (2) soient mis en communication avec les conduits longitudinaux (32) formés dans sa seconde partie (2b).

21. Etrier selon la revendication 1, dans lequel les bouchons forment des robinets de purge.

22. Etrier selon l'une quelconque des revendications précédentes, comprenant en outre des moyens destinés à raccorder le corps d'étrier à une partie fixe du véhicule.

23. Etrier selon la revendication 22, dans lequel les moyens de raccordement comprennent des trous de raccordement (54', 54'').

24. Etrier selon la revendication 23, dans lequel il y a deux trous de raccordement, tous deux formés dans l'une des parties (2a, 2b) du corps d'étrier (2).

25. Etrier selon l'une quelconque des revendications précédentes, dans lequel l'élément de raccordement est muni d'un conduit formé par un canal axial faisant face au disque.

26. Etrier selon la revendication 25, dans lequel le conduit est recouvert par la paroi d'un couvercle.

27. Etrier selon la revendication 26, dans lequel la paroi du couvercle est faite d'une tôle d'acier.

28. Etrier selon la revendication 1, dans lequel l'étrier comprend un premier robinet de purge (46) et un second robinet de purge (48) qui ferment un premier conduit longitudinal (32a) et un second conduit longitudinal (32b) de la première partie (2a) du corps d'étrier (2), respectivement.

29. Etrier selon la revendication 1, dans lequel l'étrier comprend un premier robinet de purge (50) et un second robinet de purge (52) qui ferment un premier conduit longitudinal (32a) et un second conduit longitudinal (32b) de la seconde partie (2b) du corps d'étrier (2), respectivement.
